Europäisches Patentamt

European Patent Office

Office européen des brevets

(11) Publication number: 0 278 789 B1

# EUROPEAN PATENT SPECIFICATION

(45) Date of publication of patent specification: 30.03.94   (51) Int. Cl.⁵: G11B 7/24

(21) Application number: 88301240.3

(22) Date of filing: 15.02.88

(54) Recording elements comprising write-once thin film alloy layers.

(30) Priority: 13.02.87 US 14336

(43) Date of publication of application:
17.08.88 Bulletin 88/33

(45) Publication of the grant of the patent:
30.03.94 Bulletin 94/13

(84) Designated Contracting States:
BE CH DE FR GB IT LI NL SE

(56) References cited:

PATENT ABSTRACTS OF JAPAN vol. 10, no.
26 (P--425)(2083) 31 January 1986,& JP-A-60
177446

PATENT ABSTRACTS OF JAPAN vol. 8, no.
136 (M--304)(1573) 23 June 1984,& JP-A-59
35988

(73) Proprietor: EASTMAN KODAK COMPANY (a
New Jersey corporation)
343 State Street
Rochester New York 14650(US)

(72) Inventor: Pan, Kee-Chuan c/o Eastman Kodak
Company
Patent Department
343 State Street
Rochester New York 14650(US)
Inventor: Tyan, Yuan-Sheng c/o Eastman Ko-
dak Company
Patent Department
343 State Street
Rochester New York 14650(US)
Inventor: Preuss, Donald Robert c/o Eastman
Kodak Company
Patent Department
343 State Street
Rochester New York 14650(US)

(74) Representative: Phillips, Margaret Dawn et al
Kodak Limited
Patent Department
Headstone Drive
Harrow, Middlesex HA1 4TY (GB)

**Description**

This invention relates to recording elements and recording methods.

Thin film optical recording layers using chalcogenide thin-films and amorphous to crystalline phase transitions have been the subject of many investigations since the early 1970's. The initial interests were focused on "erasable", and therefore reusable, optical recording layers since the amorphous to crystalline transition is, in principle, a reversible process. Such layers are generally prepared by a vacuum process. The layer is amorphous when so prepared. A low power, relatively long duration laser pulse is used to heat a local spot on the layer to below the melting point for a sufficient length of time to cause the spots to crystallize. These crystalline spots can in turn be heated, by a higher power, shorter duration laser, above the melting point of the crystallized spots to randomize the structure of the spots. The layer is designed such that upon the termination of the laser pulse the cooling rate of the heated spot is high enough that the randomized structure is frozen to achieve an amorphous state.

Thus by adjusting the laser power and duration, the state of a selected area on the layer can be switched between the amorphous state and the crystalline state to create a pattern of amorphous and crystalline spots which can be used for information storage. Since the phase transition is reversible, the pattern can be erased and replaced with a different recorded pattern. Theoretically, this erase-write cycle can be carried out any number of times.

A principal difficulty is that the rate of crystallization of most layers studied is usually too low. For practical applications, it is desirable to have layers which can be crystallized by laser pulses shorter than a microsecond ($\mu$s). Presently, few materials have demonstrated such capabilities. For some materials with high crystallization rates (e.g. Te-Sn alloy), the data retention times are often not adequate because of the instability of the amorphous state.

Because of the slow crystallization of most materials, the crystallization step is generally used as the erasure step in erasable optical recording layers. A laser spot elongated in the direction of the laser movement is used to give an effectively long duration laser exposure. Such long laser spots cannot be used for high density recordings. The amorphizing step, on the other hand, is used as the recording step since this can be achieved with short laser pulse, and hence can be done at high speed.

Very few materials are known for optical recording layers in which the above described write-erase-write cycle is of practical use. No erasable phase-change type optical recording layers have been commercialized.

A good deal of attention has also focused on so-called "write-once" thin film optical recording layers. Write-once simply means that the layers can be recorded upon only once. Such layers cannot be erased and reused for a subsequent recording.

Since thin film optical recording layers are generally amorphous when prepared, it is desirable to use the crystallization step as the recording step in write-once layers. However, the problem of slow crystallization prevents the achievement of high data rates. High data rates are critical for write-once layers designed for use with computers.

European Patent Application 0184452 broadly discloses erasable optical recording layers of antimony-indium and antimony-indium-tin alloys.

Information recording and erasure are said to be achieved by switching the layers between two different crystalline states. The layers are generally prepared in the amorphous states which have to be first converted into one of the two crystalline states before information can be recorded. The crystallization step, achieved by either a bulk heat-treatment or a prolonged laser exposure, is said to have a lower reflectance than the amorphous state. The examples indicate that the materials disclosed therein have a very slow rate of crystallization. This application further teaches that the optical recording layers disclosed therein are unsuitable for use in the amorphous-to-crystalline transition mechanism because of the instability of the amorphous state in general.

Experimental evidence has shown that the crystalline-crystalline recordings and the fast amorphous-to-crystalline recordings are mutually exclusive. Compositions which demonstrate properties suitable for one mode of recording are not suitable for the other mode of recording.

Another problem is that many of the chalcogen containing materials which undergo the amorphous-to-crystalline transition mechanism are usually corrosion prone.

The problem is that the prior art has not provided write-once optical recording layers which possess the combination of a) a crystallization rate less than 1.0 ms, b) good corrosion resistance, c) a stable amorphous state and d) a capability of high rate, high density recordings.

In the prior art JP-A-60 177446 discloses a recording medium comprising an erasable thin-film optical recording layer (where information is written in special crystalline areas in a crystalline film) of an alloy comprising In, Sb and Sn but with its formula delimited from that of the alloy used herein.

The solution of the problem is given in independent claims 1, 2 and 8 and further aspects of this solution are covered in the remaining claims. The elements of this invention do not suffer the environmental corrosion seen in chalcogen rich thin films. The rate of crystallization of the optical recording layers is less than 1 ms using practical laser power. The amorphous state is very stable. Thus, recordings on the thin film are made using the amorphous to crystalline transition mechanism. The layers are capable of high density, high rate recordings. Moreover the layers cannot be switched between two different crystalline states as suggested by European Patent Application 0184452 and the crystalline state is uniformly more reflective than the amorphous state.

It has been found that layers formed from alloy compositions outside of the defined polygon in claims 1, 2 and 8 are either crystalline as deposited or b) crystallize too slowly to be of practical use. The layers have an amorphous to crystalline transition temperature of at least 80°C.

Layers used in the elements of the invention are capable of forming only a single crystalline state. That is the crystalline state is the same throughout the recorded layer. In many recordings the crystalline areas will have a uniform composition.

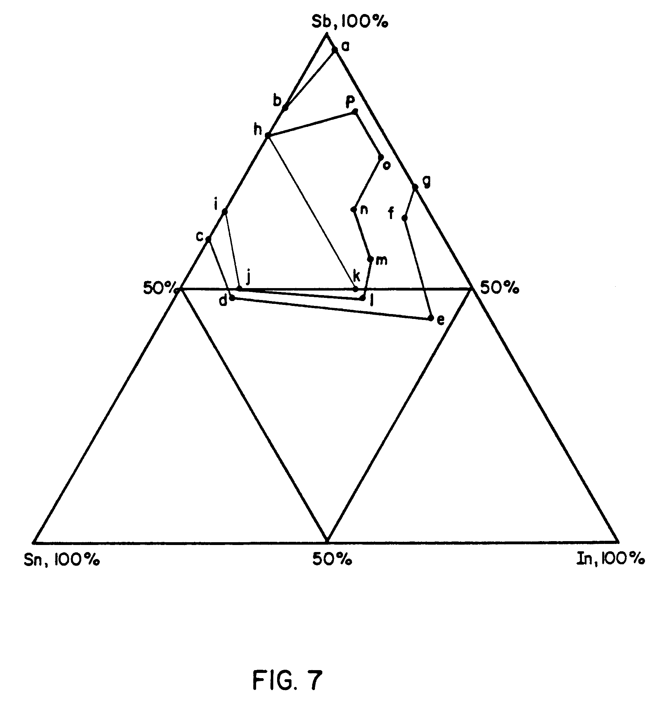

Useful record and recording elements have alloy compositions within a polygon in figure 7 having the following vertices and corresponding coordinates:

| Vertices | Coordinates | | |
| --- | --- | --- | --- |
| | Sb | Sn | In |
| h | 80 | 20 | 0 |
| i | 65 | 35 | 0 |
| j | 50 | 40 | 10 |
| l | 48 | 20 | 32 |
| m | 55 | 15 | 30 |
| n | 65 | 13 | 22 |
| o | 75 | 3 | 22 |
| p | 84 | 3 | 13 |

Especially useful record and recording elements have alloy compositions within a polygon in figure 7 having the following vertices and corresponding coordinates:

| Vertices | Coordinates | | |
| --- | --- | --- | --- |
| | Sb | Sn | In |
| h | 80 | 20 | 0 |
| i | 65 | 35 | 0 |
| j | 50 | 40 | 10 |
| k | 50 | 20 | 30 |

The present invention will now be described by way of example with reference to the accompanying drawings, in which:-

Figure 1 is a description of a schematic recording and readback apparatus for using the recording elements of the invention;

Figure 2 is a schematic cross section of an optical recording element of this invention;

3

Figures 3, 4, 5 and 6 are curves showing some of the experimental results of the examples; and

Figure 7 is a ternary composition diagram showing a polygon within which useful alloy mixtures in the present invention are found.

Recording information on the thin film layers is achieved by focusing an information modulated laser beam on the layer thereby forming a pattern of crystalline and amorphous areas on the layer. All the crystalline areas will be in the same state.

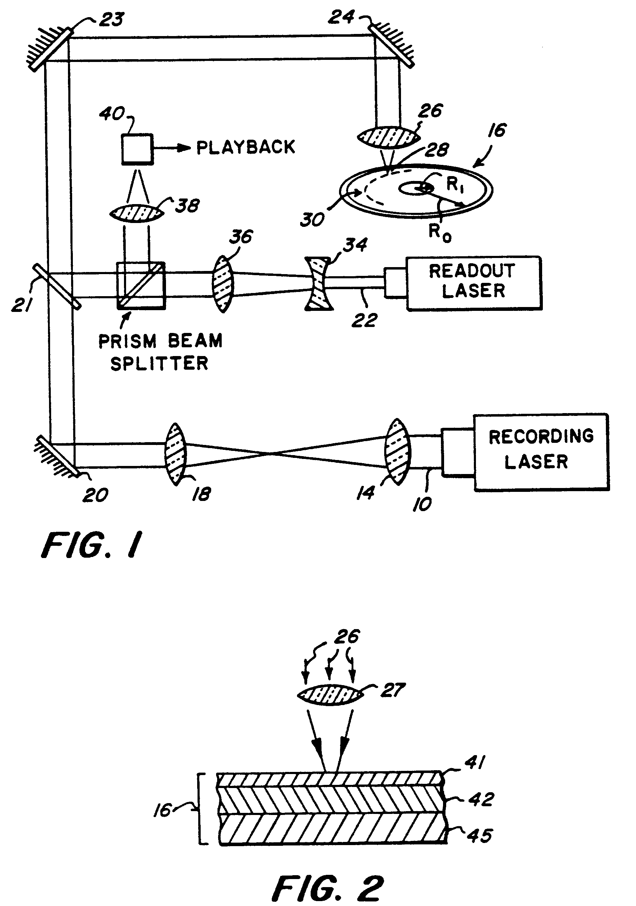

Figure 1 shows a schematic of an apparatus for recording information on an optical recording element 16 of the invention and for playing back the recorded information therefrom. Referring to figure 2, recording element 16 comprises an overcoat layer 41, amorphous thin film optical recording layer 42 on substrate 45. In response to a drive signal, the intensity of a diode recording beam is modulated in accordance with information to be recorded on thin film 42. The modulated laser beam is collected by a lens 14 and collimated by a lens 18 and is directed by means of mirror elements 20, 23 and 24 to a lens 26 which focuses the modulated laser beam to a recording spot 28 on the film 42 as shown in Figure 1.

During recording, the element 16 is spun at a constant rate, e.g. 1800 rotations per minute (rpm). As a result, a track of information 30 is recorded on the optical recording layer in the form of selected crystallized areas. As recording continues, the recording spot 28 is caused (by means not shown) to scan radially inward across the element 16, thereby causing information to be recorded along a spiral or concentric track that extends from an outer radius $r_o$ to an inner radius $r_i$. The sizes and spacings of the recorded information marks vary in accordance with the information content of the recording laser drive signal, as well as with radial position on the element 16.

During the readback process, the new information bearing element 16 is spun at the same rate as it was spun during the recording process. A laser beam 22 from a readout laser is expanded in diameter by means of lenses 34 and 36. The optical path of the readout laser beam is folded by a beam splitter 21 and mirrors 23 and 24 so that the readout laser beam is focused to a playback spot on the element 16 by the high numerical aperture lens 26. The element 16 is assumed to be of the reflective type so that the radiation forming the playback spot is reflected back through the high numerical aperture lens 26 after interacting with the information marks recorded on the optical element 16. A lens 38 directs reflected laser radiation which has been diverted by the prism beamsplitter onto a detector 40 which produces an electrical playback signal in response to temporal variations (contrast) in the irradiance of the reflected laser radiation falling on the detector.

The amorphous thin film optical recording layers of this invention are written upon with a coherent beam of electromagnetic radiation of sufficient energy to convert selected portions of the amorphous film 42 to a crystalline state. In the present invention the amorphous thin film optical recording layers are of sufficient sensitivity that laser powers of 2 to 10 mW at laser pulsewidth of 40 to 100 nanoseconds provides sufficient energy to make the conversion.

Recordings on the amorphous thin film were made with a static pit tester.

The static pit tester provides automated facilities in which a microcomputer controls the sample position, the laser power and the laser pulse width. Each recording layer is exposed with a 830 nanometer laser diode in the static pit tester to produce a matrix of spots in which the laser power is varied from 4 to 12 mW and the pulse width varied from 40 to 30,000 nanoseconds. The suitability of the recording layer for optical recording is determined by measuring the change in reflection between the exposed and unexposed areas of the sample, i.e. between the crystalline and amorphous states.

This reflection change is expressed as recording contrast, CT, by the following definition:

$$CT = \frac{R_c - R_\alpha}{R_c + R_\alpha} \times 100\%$$

wherein $R_c$ and $R_\alpha$ are the reflectances of the crystalline and the amorphous states, respectively. A minimum contrast of 5 percent must be achieved for the films to be considered useful as optical recording layers.

The thin amorphous film recording layers can be prepared by conventional thin film deposition techniques such as evaporation, RF (radio frequency) and DC (direct current) sputtering from an alloy target, and RF and DC co-sputtering from targets of the individual elements. Enhancement of sputtering processes by applying magnetic fields (magnetron sputtering) can also be used. The thickness of the films can be from a few tens to a few hundreds nanometers depending on compromises among factors such as contrast, sensitivity, production rate, material cost, ease of control, data rate, etc.

Supports which can be used include plastic films, such as polyethylene terephthalate, polymethyl methacrylate, and polycarbonate, a glass plate, paper and metallic plates.

The practice of the invention is further described in the following examples. In the examples, each thin film optical recording layer is represented by the symbol $Sb_x In_y Sn_z$ wherein x, y and z are atom percents.

Example 1

Two amorphous thin film optical recording layers of this invention were prepared by a sputtering process. A target composed of mixed Sb and In powders was pre-sputtered in an 8 mtorr Ar atmosphere for one hour. The pre-sputtering step was designed to achieve a steady state deposition condition.

Thin films of about 80 nm in thickness were then prepared by sputtering the pre-sputtered mix for 3.5 minutes. The sputtered mix was deposited as a thin film on a glass support. The atomic fraction of each component in the prepared film was determined by inductively coupled plasma (ICP).

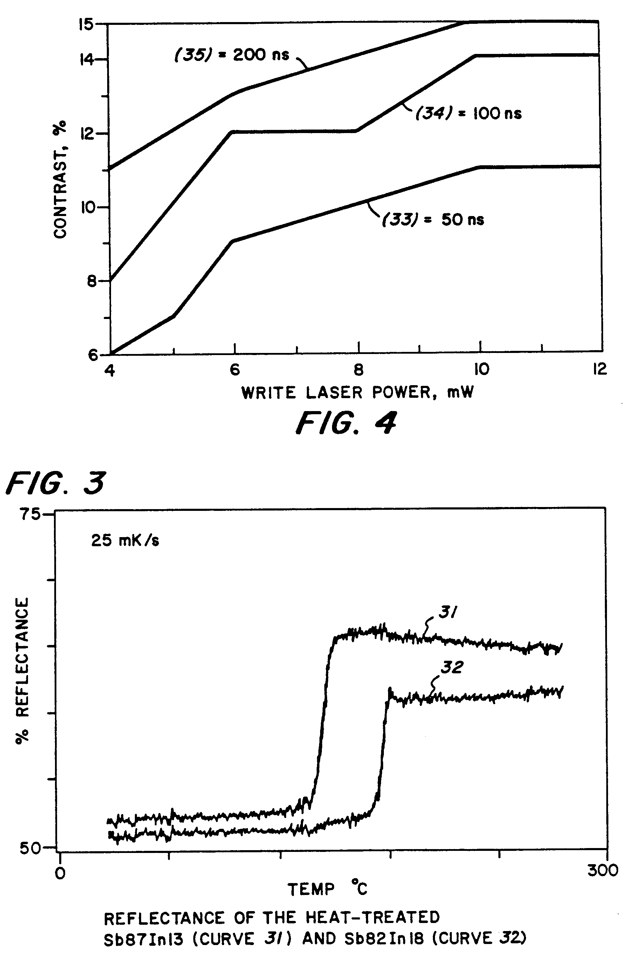

Figure 3 shows the amorphous to crystalline temperature of thin films of antimony-indium comprising a) 13 atom percent indium (curve 31) and b) 18 atom percent indium (curve 32). The transition temperatures were for film a) 144°C and for film b) 175°C. The heating rate was 25 milli-Kelvin per second. These high transition temperatures show that the amorphous state of the films are very stable. This is an important keeping property. Spontaneous transition from amorphous to crystalline would be detrimental to optical recording layers in that the reflectance difference between the crystalline areas and amorphous areas would be lost.

Figure 3 also shows the excellent contrast achieved with the thin film antimony-indium layers of the invention.

Another sample of the thin antimony-indium film comprising 13 atom percent of indium was written upon using the static pit tester described herein before. The writing was in the form of crystallized marks on the films. The film ($Sb_{87} In_{13}$) with the crystallized written spots was placed in a chamber at 70°C and 30 percent relative humidity for an accelerated stability test. After 45 days, the film was examined. We did not observe any phase change or corrosion on the unwritten area or the written spots. The film did not have any overcoat as a protective layer against corrosion. This test shows that the films of the invention bearing written spots are thermally and environmentally stable.

Another film sample comprising 13 atom percent indium was subjected to performance tests on the static pit tester. A pulsed semiconductor laser beam with a wavelength of 830 nm was used for writing. The writing sensitivity and contrast at various powers and pulse widths are shown in Figure 4. Figure 4 shows the percent contrast between the initial reflectance of the amorphous state and the final reflectance of the crystallized state is clearly measurable and can thus be read by state of the art laser read systems. This data also shows a) that the thin films can be written upon using practical laser powers and writing speeds and b) the reflectivity of the crystalline state is higher than the amorphous state.

Example 2

A number of amorphous Sb-Sn and Sb-In thin films with a range of compositions were prepared according to the method in Example 1. Some representative compositions are $Sb_{75} Sn_{25}$, $Sb_{70} Sn_{30}$, $Sb_{92} In_8$, $Sb_{77} In_{23}$ and $Sb_{71} In_{29}$. The first four films can be written upon with a laser pulse length of 50 ns and power of 6 mW. The last film can be written upon at a laser pulse length of 1 $\mu$s and power of 6mW.

Example 3

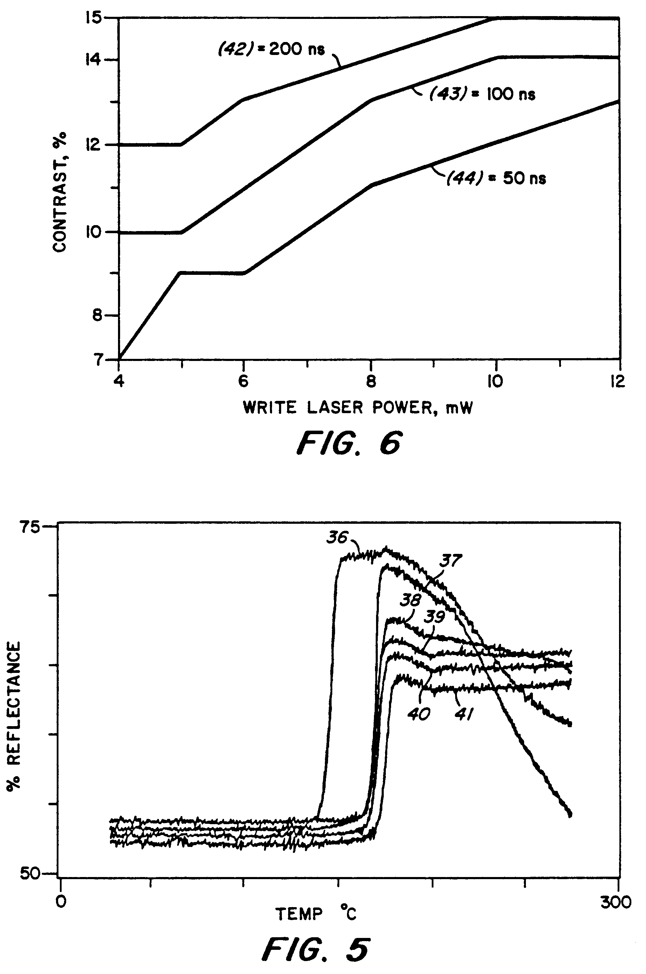

Thin films of about 100 nm in thickness were then prepared by sputtering for 3.5 minutes as in example 1. Figure 5 shows the amorphous to crystalline temperature and reflectance of several different thin films of the invention having a Sb/In ratio of 5 and comprising specified atom percent Sn.

The amorphous to crystalline transition temperature, the percent Sn and curve number is set out below:

| Curve No. | Temperature °C | % Sn |
|-----------|----------------|------|
| 36 | 174 | 20 |
| 37 | 204 | 10 |
| 38 | 206 | 5 |
| 39 | 207 | 2.3 |
| 40 | 208 | 1.3 |
| 41 | 210 | 1 |

Also note that, in Figure 5, the contrast increases with increasing Sn content in the films. The reflectance of the crystalline areas were consistently greater than the amorphous areas.

Another thin film sample ($Sb_{64}In_{16}Sn_{20}$) was written upon using the static pit tester described herein before. The writing was in the form of crystallized marks on the films. The film with the crystallized written spots was placed in a chamber at 70°C and 30 percent relative humidity for an accelerated stability test. After 14 days, the film was examined. We did not observe any phase change or corrosion on the unwritten film or the written spots. The film did not have any overcoat as a protective layer against corrosion. This test shows that the films of the invention bearing written spots are both thermally and environmentally stable.

Another film sample ($Sb_{64}In_{16}Sn_{20}$) was subjected to performance tests on the static pit tester. A pulsed semiconductor laser beam with a wavelength of 830 nm was used for writing. The writing sensitivity and contrast at various powers and pulse widths are shown in Figure 6. Figure 6 shows the percent contrast between the initial reflectance of the amorphous state and the final reflectance of the crystallized state is clearly measurable and can thus be read by state of the art laser read systems. This data also shows that the thin films can be written upon using practical laser powers and writing speeds.

Example 4

A number of amorphous thin films with a range of compositions were prepared according to the method in Example 1. Some of the representative compositions were $Sb_{90}In_9Sn_1$, $Sb_{82}In_{16}Sn_2$, $Sb_{79}In_{16}Sn_5$, $Sb_{75}In_{24}Sn_1$, $Sb_{74}In_7Sn_{19}$, $Sb_{71}In_{23}Sn_7$, $Sb_{66}In_{14}Sn_{20}$, $Sb_{56}In_{19}Sn_{25}$ and $Sb_{55}In_{34}Sn_{11}$. These films can be written upon at a laser pulse length of 50 ns and power of 6mW.

Example 5

Several homogeneous Sb-In-Sn alloy sputtering targets with various compositions were prepared by hot-pressing. The thin films were prepared by the sputtering process. Some representative compositions are $Sb_{80}In_{20}$, $Sb_{74}In_{13}Sn_{13}$, $Sb_{70}In_9Sn_{21}$, $Sb_{70}Sn_{30}$, $Sb_{69}In_{10}Sn_{21}$, $Sb_{65}In_{15}Sn_{20}$, $Sb_{62}In_{12}Sn_{26}$, $Sb_{61}In_{15}Sn_{24}$, $Sb_{60}In_5Sn_{35}$, $Sb_{57}In_{21}Sn_{22}$, $Sb_{53}In_{13}Sn_{34}$, $Sb_{51}In_{39}Sn_{10}$, $Sb_{51}In_{19}Sn_{30}$ and $Sb_{50}In_{10}Sn_{40}$. These films were amorphous and can be crystallized at a laser pulse length of 50 ns and power of 6 mW.

None of the thin film optical recording layers in the above examples could be switched between two different crystalline states.

Comparative Examples

Thin film layers were prepared in which the alloy compositions were a) $Sb_{40}In_2Sn_{58}$ and b) $Sb_{48}In_{50}Sn_2$. Film a) was crystalline when deposited. Film b) was amorphous when deposited, but extremely difficult to crystallize. Both of these films are outside the scope of the present invention.

**Claims**

1.  A recording element comprising a write-once amorphous thin-film optical recording layer of an alloy having a composition within a polygon in a ternary composition diagram of antimony, indium, and tin;

wherein a pattern of crystalline areas can be created in the amorphous layer and
   i) the composition diagram is and
ii) the polygon has the following vertices and corresponding coordinates in atom percent:

| Vertices | Coordinates | | |
|---|---|---|---|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30 |

2. A record element comprising an optical record in a layer of an amorphous alloy having
   a) a composition within a polygon in a ternary composition diagram of antimony, indium and tin wherein

i) the composition diagram is

;

and

ii) the polygon has the following vertices and corresponding coordinates in atom percent:

| Vertices | Coordinates | | |
|---|---|---|---|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30 ; |

and

b) a pattern of crystalline areas in the amorphous layer which crystalline areas are all in the same state.

3. An element according to claim 1 or claim 2 wherein the alloy has a composition within a polygon in a ternary composition diagram of antimony, indium and tin, wherein:

i) the composition diagram is and

ii) the polygon has the following vertices and corresponding coordinates in atom percent:

| Vertices | Coordinates | | |
|---|---|---|---|
| | Sb | Sn | In |
| h | 80 | 20 | 0 |
| i | 65 | 35 | 0 |
| j | 50 | 40 | 10 |
| l | 48 | 20 | 32 |
| m | 55 | 15 | 30 |
| n | 65 | 13 | 22 |
| o | 75 | 3 | 22 |
| p | 84 | 3 | 13 |

4. An element according to claim 1 or 2 wherein the alloy has a composition within a polygon in a ternary composition diagram of antimony, indium and tin wherein:

i) the composition diagram is and

ii) the polygon has the following vertices and corresponding coordinates in atom percent:

| Vertices | Coordinates | | |
|---|---|---|---|
| | Sb | Sn | In |
| h | 80 | 20 | 0 |
| i | 65 | 35 | 0 |
| j | 50 | 40 | 10 |
| k | 50 | 20 | 30 |

5. The element of claim 1 or 2 having an amorphous to crystalline transition temperature of at least 80 °C.

6. The element of claim 1 or 2 in which the layer is capable of exhibiting only a single crystalline state having a substantially uniform composition.

7. The element of claim 1 or 2 in which the alloy has the composition $Sb_{65}In_{15}Sn_{20}$; $Sb_{61}In_{15}Sn_{24}$; $Sb_{62}In_{12}Sn_{26}$; $Sb_{53}In_{13}Sn_{34}$; $Sb_{50}In_{10}Sn_{40}$; $Sb_{70}In_9Sn_{21}$; $Sb_{57}In_{21}Sn_{22}$; $Sb_{69}In_{10}Sn_{21}$; $Sb_{51}In_{19}Sn_{30}$ or $Sb_{60}In_5Sn_{35}$.

8. A method of recording information, comprising the steps of:
   a) providing a recording element comprising a write-once amorphous thin-film optical recording layer of an alloy having a composition within a polygon in a ternary composition diagram of antimony, indium, and tin; wherein

i) the composition diagram is and

ii) the polygon has the following vertices and corresponding coordinates in atom percent:

| Vertices | Coordinates | | |
|---|---|---|---|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30 ; |

and

b) focusing an information modulated laser beam on the recording layer to form a pattern of crystalline areas in the amorphous layer; wherein all the crystalline areas are in the same state with a higher reflectivity than the amorphous areas.

9. The method of a claim 8 wherein the alloy has a composition within a polygon in a ternary composition diagram of antimony, indium and tin wherein

i) the composition diagram is

;

and

ii) the polygon has the following vertices and corresponding coordinates in atom percent:

| Vertices | Coordinates | | |
|:---:|:---:|:---:|:---:|
| | Sb | Sn | In |
| h | 80 | 20 | 0 |
| i | 65 | 35 | 0 |
| j | 50 | 40 | 10 |
| l | 48 | 20 | 32 |
| m | 55 | 15 | 30 |
| n | 65 | 13 | 22 |
| o | 75 | 3 | 22 |
| p | 84 | 3 | 13 |

10. The method of claim 8 wherein the alloy has a composition within a polygon in a ternary composition diagram of antimony, indium and tin, wherein:

i) the composition diagram is

Sb, 100%

h

i

50%    j    k    50%

Sn, 100%    50%    In, 100%

;

and

ii) the polygon has the following vertices and corresponding coordinates in atom percent:

| Vertices | Coordinates | | |
|---|---|---|---|
|  | Sb | Sn | In |
| h | 80 | 20 | 0 |
| i | 65 | 35 | 0 |
| j | 50 | 40 | 10 |
| k | 50 | 20 | 30 |

**11.** The method of claim 8 wherein the alloy comprises $Sb_{65}In_{15}Sn_{20}$; $Sb_{61}In_{15}Sn_{24}$; $Sb_{62}In_{12}Sn_{26}$; $Sb_{53}In_{13}Sn_{34}$; $Sb_{50}In_{10}Sn_{40}$; $Sb_{70}In_{9}Sn_{21}$; $Sb_{57}In_{21}Sn_{22}$; $Sb_{69}In_{10}Sn_{21}$; $Sb_{51}In_{19}Sn_{30}$ or $Sb_{60}In_{5}Sn_{35}$.

**Patentansprüche**

**1.** Aufzeichnungselement mit einer einmal beschriftbaren amorphen optischen Dünnfilm-Aufzeichnungsschicht aus einer Legierung mit einer Zusammensetzung innerhalb eines Polygons in einem ternären Zusammensetzungs-Diagramm von Antimon, Indium und Zinn, in dem in der amorphen Schicht ein Muster kristalliner Bezirke erzeugt werden kann, mit

i) dem folgenden Zusammensetzungs-Diagramm

und

ii) wobei das Polygon die folgenden Scheitelpunkte (Vertices) und entsprechenden Koordinaten in Atom-Prozent aufweist:

| Scheitelpunkte | Koordinaten | | |
|---|---|---|---|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30 |

2. Aufzeichnungselement mit einer optischen Aufzeichnung in einer Schicht einer amorphen Legierung mit
a) einer Zusammensetzung innerhalb eines Polygons in einem ternären Zusammensetzungs-Diagramm von Antimon, Indium und Zinn, mit

i) dem folgenden Zusammensetzungs-Diagramm:

und

ii) wobei das Polygon die folgenden Scheitelpunkte (Vertices) und entsprechenden Koordinaten in Atom-Prozent aufweist:

| Scheitelpunkte | Koordinaten | | |
|---|---|---|---|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30; |

und

b) einem Muster von kristallinen Bereichen in der amorphen Schicht, wobei sich die kristallinen Bereiche sämtlich im gleichen Zustand befinden.

3. Element nach Anspruch 1 oder 2, in dem die Legierung eine Zusammensetzung innerhalb eines Polygons in einem ternären Zusammensetzungs-Diagramm von Antimon, Indium und Zinn aufweist, wobei:

i) das Zusammensetzungs-Diagramm das folgende Diagramm ist:

und

ii) das Polygon die folgenden Scheitelpunkte und entsprechenden Koordination in Atom-Prozent aufweist:

| Scheitelpunkte | Koordinaten | | |
|:---:|:---:|:---:|:---:|
| | Sb | Sn | In |
| h | 80 | 20 | 0 |
| i | 65 | 35 | 0 |
| j | 50 | 40 | 10 |
| l | 48 | 20 | 32 |
| m | 55 | 15 | 30 |
| n | 65 | 13 | 22 |
| o | 75 | 3 | 22 |
| p | 84 | 3 | 13 |

4. Element nach Anspruch 1 oder 2, in dem die Legierung eine Zusammensetzung innerhalb eines Polygons in einem ternären Zusammensetzungs-Diagramm von Antimon, Indium und Zinn aufweist, worin:

16

i) das Zusammensetzungs-Diagramm das folgende Diagramm ist:

und

ii) das Polygon die folgenden Scheitelpunkte und entsprechenden Koordinaten in Atom-Prozent aufweist:

| Scheitelpunkte | Koordinaten | | |
|---|---|---|---|
| | Sb | Sn | In |
| h | 80 | 20 | 0 |
| i | 65 | 35 | 0 |
| j | 50 | 40 | 10 |
| k | 50 | 20 | 30 |

5. Element nach Anspruch 1 oder 2 mit einer Übergangstemperatur von amorph nach kristallin von mindestens 80 °C.

6. Element nach Anspruch 1 oder 2, in dem die Schicht lediglich einen einzelnen kristallinen Zustand aufweist mit praktisch gleichförmiger Zusammensetzung.

7. Element nach Anspruch 1 oder 2, in dem die Legierung die folgende Zusammensetzung hat: $Sb_{65}In_{15}Sn_{20}$; $Sb_{61}In_{15}Sn_{24}$; $Sb_{62}In_{12}Sn_{26}$; $Sb_{53}In_{13}Sn_{34}$; $Sb_{50}In_{10}Sn_{40}$; $Sb_{70}In_9Sn_{21}$; $Sb_{57}In_{21}Sn_{22}$; $Sb_{69}In_{10}Sn_{21}$; $Sb_{51}In_{19}Sn_{30}$ oder $Sb_{60}In_5Sn_{35}$.

8. Verfahren zur Aufzeichnung von Informationen mit den Stufen:
   a) Bereitstellung eines Aufzeichnungselementes mit einer einmal beschriftbaren amorphen optischen Dünnfilm-Aufzeichnungsschicht aus einer Legierung mit einer Zusammensetzung innerhalb eines Polygons in einem ternären Zusammensetzungs-Diagramm von Antimon, Indium und Zinn; wobei

i) das Zusammensetzungs-Diagramm das folgende Diagramm ist:

und

ii) das Polygon die folgenden Scheitelpunkte und entsprechenden Koordinaten in Atom-Prozent aufweist:

| Scheitelpunkte | Koordinaten | | |
|---|---|---|---|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30 ; |

und

b) Fokussieren eines mit einer Information modulierten Laserstrahles auf die Aufzeichnungsschicht unter Erzeugung eines Musters von kristallinen Bereichen in der amorphen Schicht; wobei sämtliche kristallinen Bereiche im gleichen Zustand sind, mit einer höheren Reflektivität als die amorphen Bereiche.

9. Verfahren nach Anspruch 8, in dem die Legierung eine Zusammensetzung innerhalb eines Polygons in einem ternären Zusammensetzungs-Diagramm von Antimon, Indium und Zinn aufweist, wobei

i) das Zusammensetzungs-Diagramm das folgende Diagramm ist:

und

ii) das Polygon die folgenden Scheitelpunkte und entsprechenden Koordinaten in Atom-Prozent aufweist:

| Scheitelpunkte | Koordinaten | | |
| --- | --- | --- | --- |
| | Sb | Sn | In |
| h | 80 | 20 | 0 |
| i | 65 | 35 | 0 |
| j | 50 | 40 | 10 |
| l | 48 | 20 | 32 |
| m | 55 | 15 | 30 |
| n | 65 | 13 | 22 |
| o | 75 | 3 | 22 |
| p | 84 | 3 | 13 |

10. Verfahren nach Anspruch 8, in dem die Legierung eine Zusammensetzung innerhalb eines Polygons in einem ternären Zusammensetzungs-Diagramm von Antimon, Indium und Zinn aufweist, wobei:

EP 0 278 789 B1

i) das Zusammensetzungs-Diagramm das folgende Diagramm ist:

und

ii) das Polygon die folgenden Scheitelpunkte und entsprechenden Koordinaten in Atom-Prozent aufweist:

| Scheitelpunkte | Koordinaten | | |
|---|---|---|---|
| | Sb | Sn | In |
| h | 80 | 20 | 0 |
| i | 65 | 35 | 0 |
| j | 50 | 40 | 10 |
| k | 50 | 20 | 30 |

11. Verfahren nach Anspruch 8, bei dem die Legierung die folgende Zusammensetzung aufweist: $Sb_{65}In_{15}Sn_{20}$; $Sb_{61}In_{15}Sn_{24}$; $Sb_{62}In_{12}Sn_{26}$; $Sb_{53}In_{13}Sn_{34}$; $Sb_{50}In_{10}Sn_{40}$; $Sb_{70}In_9Sn_{21}$; $Sb_{57}In_{21}Sn_{22}$; $Sb_{69}In_{10}Sn_{21}$; $Sb_{51}In_{19}Sn_{30}$ oder $Sb_{60}In_5Sn_{35}$.

**Revendications**

1. Elément d'enregistrement comprenant une couche d'enregistrement optique non-effaçable faite d'un film mince amorphe d'un alliage dont la composition est représentée par un polygone inscrit dans un diagramme de composition ternaire d'antimoine, d'indium et d'étain, dans lequel une figure correspondant aux zones cristallines peut être crée dans la couche amorphe et

20

i) le diagramme de la composition est

et

ii) les sommets du polygone et les coordonnées correspondantes en % atomique sont les suivants :

| Sommets | Coordonnées | | |
|---|---|---|---|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30 |

2. Elément d'enregistrement comprenant un enregistrement optique dans une couche d'alliage amorphe ayant
a) une composition représentée par un polygone inscrit dans un diagramme de composition ternaire d'antimoine, d'indium et d'étain dans lequel

i) le diagramme de la composition est

;

et

ii) les sommets du polygone ainsi que les coordonnées correspondantes en % atomique sont les suivants :

| Sommets | Coordonnées | | |
|---|---|---|---|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30 ; |

et

b) une figure de zones cristalline dans la couche amorphe, les zones cristallines se trouvant toutes dans le même état.

3. Elément selon la revendication 1 ou 2, dans lequel la composition de l'alliage est représentée par un polygone inscrit dans un diagramme de composition ternaire d'antimoine, d'indium et d'étain, dans lequel :

i) le diagramme de la composition est

;

et

ii) les sommets du polygone ainsi que les coordonnées correspondantes en % atomique sont les suivants :

| Sommets | Coordonnées | | |
|---|---|---|---|
| | Sb | Sn | In |
| h | 80 | 20 | 0 |
| i | 65 | 35 | 0 |
| j | 50 | 40 | 10 |
| l | 48 | 20 | 32 |
| m | 55 | 15 | 30 |
| n | 65 | 13 | 22 |
| o | 75 | 3 | 22 |
| p | 84 | 3 | 13 |

4. Elément selon la revendication 1 ou 2, dans lequel la composition de l'alliage est représentée par un polygone inscrit dans un diagramme de composition ternaire d'antimoine, d'indium et d'étain, dans lequel :

i) le diagramme de la composition est :

et

ii) les sommets du polygone ainsi que les coordonnées correspondantes en % atomique sont les suivants :

| Sommets | Coordonnées | | |
|---------|-----|-----|-----|
| | Sb | Sn | In |
| h | 80 | 20 | 0 |
| i | 65 | 35 | 0 |
| j | 50 | 40 | 10 |
| k | 50 | 20 | 30 |

**5.** Elément de la revendication 1 ou 2, ayant une température de transition de l'état amorphe à l'état cristallin d'au moins 80°C.

**6.** Elément de la revendication 1 ou 2, dans lequel la couche ne présente qu'un seul état cristallin ayant une composition pratiquement uniforme.

**7.** Elément de la revendication 1 ou 2, dans lequel l'alliage a la composition $Sb_{65}In_{15}Sn_{20}$ ; $Sb_{61}In_{15}Sn_{24}$ ; $Sb_{62}In_{12}Sn_{26}$ ; $Sb_{53}In_{13}Sn_{34}$ ; $Sb_{50}In_{10}Sn_{40}$ ; $Sb_{70}In_9Sn_{21}$ ; $Sb_{57}In_{21}Sn_{22}$ ; $Sb_{69}In_{10}Sn_{21}$ ; $Sb_{51}In_{19}Sn_{30}$ ou $Sb_{60}In_5Sn_{35}$.

**8.** Procédé pour enregistrer des informations, comprenant les étapes suivantes :
a) prendre un élément d'enregistrement comprenant une couche d'enregistrement optique non-effaçable fait d'un film mince amorphe d'un alliage ayant une composition représentée par un polygone inscrit dans un diagramme de composition ternaire d'antimoine, d'indium et d'étain, dans lequel :

i) le diagramme de la composition est :

*i*

et

ii) les sommets du polygone ainsi que les coordonnées correspondantes en % atomique sont les suivants :

| Sommets | Coordonnées | | |
|---------|-----|-----|-----|
| | Sb | Sn | In |
| a | 97 | 0 | 3 |
| b | 85 | 15 | 0 |
| c | 60 | 40 | 0 |
| d | 48 | 42 | 10 |
| e | 44 | 10 | 46 |
| f | 64 | 5 | 31 |
| g | 70 | 0 | 30 ; |

et

b) focaliser un faisceau laser modulé par une information sur la couche d'enregistrement pour former une figure de zones cristallines dans la couche amorphe ; dans laquelle toutes les zones cristallines sont dans le même état et ont un pouvoir réfléchissant supérieur à celui des zones amorphes.

9. Procédé de la revendication 8, dans lequel la composition de l'alliage est représentée par un polygone inscrit dans un diagramme de composition ternaire d'antimoine, d'indium et d'étain, dans lequel :

25

i) le diagramme de la composition est :

et

ii) les sommets du polygone ainsi que les coordonées correspondantes en % atomique sont les suivants :

| Sommets | Coordonnées | | |
|---------|-----|-----|-----|
|         | Sb  | Sn  | In  |
| h       | 80  | 20  | 0   |
| i       | 65  | 35  | 0   |
| j       | 50  | 40  | 10  |
| l       | 48  | 20  | 32  |
| m       | 55  | 15  | 30  |
| n       | 65  | 13  | 22  |
| o       | 75  | 3   | 22  |
| p       | 84  | 3   | 13  |

**10.** Procédé de la revendication 8, dans lequel la composition de l'alliage est représentée par un polygone inscrit dans un diagramme de composition ternaire d'antimoine, d'indium et d'étain, dans lequel :

i) le diagramme de la composition est :

et

ii) les sommets du polygone ainsi que les coordonées corespondantes en % atomique sont les suivants :

| Sommets | Coordonnées | | |
|---------|-----|-----|-----|
|         | Sb  | Sn  | In  |
| h       | 80  | 20  | 0   |
| i       | 65  | 35  | 0   |
| j       | 50  | 40  | 10  |
| K       | 50  | 20  | 30  |

**11.** Procédé de la revendication 8, dans lequel l'alliage a la composition $Sb_{65}In_{15}Sn_{20}$ ; $Sb_{61}In_{15}Sn_{24}$ ; $Sb_{62}In_{12}Sn_{26}$ ; $Sb_{53}In_{13}Sn_{34}$ ; $Sb_{50}In_{10}Sn_{40}$ ; $Sb_{70}In_{9}Sn_{21}$ ; $Sb_{57}In_{21}Sn_{22}$ ; $Sb_{69}In_{10}Sn_{21}$ ; $Sb_{51}In_{19}Sn_{30}$ ou $Sb_{60}In_{5}Sn_{35}$.

**FIG. 1**

**FIG. 2**

*FIG. 4*

*FIG. 3*

REFLECTANCE OF THE HEAT-TREATED
$Sb_{87}In_{13}$ (CURVE *31*) AND $Sb_{82}In_{18}$ (CURVE *32*)

FIG. 6

FIG. 5

FIG. 7